# EUROPÄISCHE PATENTANMELDUNG

(11) **EP 0 886 114 A2**
(43) Veröffentlichungstag der Anmeldung: **23.12.1998**
(21) Anmeldenummer: 98108354.6
(22) Anmeldetag: 07.05.1998
(51) Int. Cl.: F25B 43/00, B01D 36/00, B01D 53/04

(54) **Aufnahmebehälter für eine Dessikativ-Charge**

(30) Priorität: 18.06.1997 DE 29710638 U
(71) Anmelder: Deutsche Controls GmbH, 80637 München (DE)
(72) Erfinder: Bernini, Michele, 43100 Parma (IT); Edel, Jacques, 92100 Boulogne - Billancourt (FR)
(74) Vertreter: Grünecker, Kinkeldey, Stockmair & Schwanhäusser Anwaltssozietät

(57) **Zusammenfassung**

In einem Aufnahmebehälter (T) für eine Trockner-Charge (C) in einer Fahrzeug-Klimaanlage, der wenigstens eine Einlaß- und Auslaßöffnung (A, E), ein in einer der Öffnungen angebrachtes Rohr (R), wenigstens eine Charge (C) und einen am Rohr angeordneten Hohlkörper aufweist, der bis auf eine Durchgangsöffnung geschlossen ist und einen für Kältemittel durchlässigen Wandbereich aufweist, ist der Hohkörper eine Filterglocke (G) mit flächigem Filtermaterial (F) im durchlässigen Wandbereich und wird die Charge (C) außerhalb der Filterglocke (G) angeordnet.

## Beschreibung

Die Erfindung betrifft einen Aufnahmebehälter gemäß Oberbegriff des Anspruchs 1.

Der Aufnahmebehälter in einer Klimaanlage hat unter anderem die Aufgabe als Trockner dem Kältemittel Wasser zu entziehen. Dazu dient oft eingesetztes Zeolith-Granulat. Die Charge soll auswechselbar sein. Im Regelfall ist die Charge in einem kältmitteldurchlässigen Säckchen geborgen. Da, z.B. im Kompressor der Klimaanlage, im Betrieb Partikel und Verunreinigungen in das Kältemittel gelangen, die bei freier Zirkulation zu Schäden führen könnten, wird von Anwendem vorgeschrieben, wenigstens einen Filter im Aufnahmebehälter anzuordnen, der Verunreinigungen zurückhält.

Aus DE-A-43 19 293 ist es bekannt, die Dessikativ-Charge in einem Durchbrüche aufweisenden Patronengehäuse ohne Filter im Kondensator unterzubringen. In DE-A-40 35 071 und DE-A-40 18 585 wird die Charge in einem im Inneren des Aufnahmebehälters nach unten greifenden, unten offenen Haltetopf gehalten, durch den ein sich in Richtung zum anderen Behälterende erstreckendes Saugrohr verläuft. Angrenzend an die Dessikativ-Charge ist ein kreisringförmiges Kissen aus Filtermaterial positioniert. Der Aufbau dieser Aufnahmebehälter ist vielteilig und teuer. Die Montage ist zeitaufwendig, wie auch die Demontage zum Austausch der Charge. Am Kissen abgelagerte Verunreinigungen können den Abströmweg zulegen. Das Kissen hat keine definierte Filterwirkung.

Bei Klimaanlagen, in denen eine Blende den Kältemittelfluß regelt, ist der Aufnahmebehälter (Akkumulator) mit der Charge im Niederdruck-Bereich angeordnet, um das Kühlmittel dem Kompressor in gasförmigem Zustand zuzuführen und flüssiges Kühlmittel zu sammeln. Akkumulatoren haben häufig und für die Schmierung des Kompressors mit im Kältemittel enthaltenem Öl zu sorgen.

Aus DE-A-36 06 029, Fig. 23, 25, ist ein Aufnahmebehälter bekannt, dessen Charge in einem mit dem Saugrohr verbundenen Hohlkörper untergebracht ist. Der Hohlkörper besitzt fensterartige Wandbereiche, die mit einem Gitter oder Netz verschlossen sind, um das Herausfallen des Dessikativ-Granulats zu verhindern. Das freie Ende des Saugrohres mündet in einer durch eine Zwischenschicht von der Charge getrennten Kammer des Hohlkörpers. Kleinste Verunreinigungen werden nicht zuverlässig am Zirkulieren gehindert. Etwaige an der Trennwand des Hohlkörpers zur Kammer abgeschiedene Verunreinigungen beeinträchtigen die Durchströmung. Ein Ersatz der Charge erfodert im Regelfall einen neuen Hohlkörper mit Saugrohr.

Der Erfindung liegt die Aufgabe zugrunde, einen Aufnahmebehälter der eingangs genannten Art zu schaffen, bei dem auf baulich einfache Weise auch kleinste Verunreinigungen am Zirkulieren in der Klimaanlage gehindert und zurückgehalten werden, ohne den Fluß des Kältemittels zu beeinträchtigen, und bei dem die Montage und der Tausch der Dessikativ-Charge bequem möglich sind, wobei der Aufnahmebehälter ein Trocknerbehälter für die Hochdruckseite bzw. ein Akkumulator für die Niederdruckseite einer Klimaanlage sein kann.

Die gestellte Aufgabe wird mit den Merkmalen des Anspruchs 1 gelöst. Die Filterglocke bietet mit dem flächigen Filtermaterial eine große Durchgangsfläche mit einer definierten Filterwirkung für das Kältemittel, die eine zum Zurückhalten auch kleinster Verunreinigungen ausreichend kleine Porengröße zu verwenden gestattet. Dies ist ohne die Gefahr möglich, den Strömungsweg des Kältemittels durch abgelagerte Verunreinigungen zu stören, und zwar unabhängig davon, ob das Kältemittel zuerst durch die Dessikativ-Charge und erst dann in die Filterglocke oder aus der Filterglocke in die Dessikativ-Charge fließt. Ein wesentlicher Vorteil der Filterglocke besteht darin, daß das flächige Filtermaterial eine optimal große Durchgangsfläche bietet, mit der die gewünschte Porengröße unter betriebsbedingten mechanischen und thermischen Einflüssen im Aufnahmebehälter derart lagegesichert ist, daß das Kältemittel auch bei kleiner Porengröße zügig strömen kann. Die Filterglocke ist kostengünstig und formstabil vorfertigbar, gegebenenfalls zusammen mit dem Rohr, und bei der Montage bzw. Demontage bequem handzuhaben. Der Aufnahmebehälter kann zur Gänze oder zumindest zum Teil aus Metall (Leichtmetall) und/oder aus Kunststoff (zweckmäßigerweise langfaserverstärktem Kunststoff, d.h. Thermoplast mit einem Gewichtsanteil zwischen ca. 30 bis 70 % langer Glasfasern mit einer Länge von ca. 10 mm oder mehr) bestehen. Die für das Kältemittel durchlässige gesamte Filterfläche der Filterglocke ist zweckmäßigerweise auf das Fassungsvermögen des Aufnahmebehälters abgestimmt, so daß beispielsweise für einen 400 cm³-Aufnahmebehälter eine Filterfläche von 15 cm² oder mehr vorliegt. Als Faustregel läßt sich angeben, daß die Filterfläche annähernd so groß ist, wie der Innenquerschnitt des Aufnahmebehälters beim freien Ende des Rohres, oder sogar größer. Die Filterglocke hat die Funktion eines Strömungsführungselements, das das Kältemittel (bei einer Strömungsrichtung von der Dessikativ-Charge in die Filterglocke) räumlich verteilt.

Gemäß Anspruch 2 ergibt sich eine optimale Strömungsführung für das Kältemittel. Die obere Wand wird zum Positionieren der Charge genutzt.

Gemäß Anspruch 3 läßt sich die Filterglocke einfach mit dem Rohr verbinden. Zur Durchgangsöffnung können keine Verunreinigungen gelangen.

Gemäß Anspruch 4 läßt sich die Charge sehr großflächig auf der oberen Wand abstützen. Die obere Wand trennt die Dessikativ-Charge räumlich von der Filterfläche. Die Strömung wird weit nach außen geleitet. Abgeschiedene bzw. zurückgehaltene Verunreinigungen können sich am Behälterboden sammeln und verschmutzen die Dessikativ-Charge nicht.

Gemäß Anspruch 5 ist die Filterglocke stabil. Die Scheibe aus dem Filtermaterial ist für die gesamte Strömung zugänglich. Zurückgehaltene Verunreinigungen lösen sich von der Scheibe und bleiben beim Boden des Aufnahmebehälters.

Gemäß Anspruch 6 wird eine große nutzbare Filterfläche erreicht. Die Verunreinigungen haben unterhalb der Scheibe genügend Platz zur Ablagerung. Die Dessikativ-Charge wird von den abgelagerten Verunreinigungen getrennt positioniert. Das Rohr mit der Filterglocke und der auf das Rohr aufgefädelten Dessikativ-Charge kann eine bequem handhabbare Baueinheit definieren, die sich am Behälterendteil (Kopfdeckel) anbringen bzw. abnehmen läßt, oder ggfs. auch den Kopfdeckel umfaßt.

Gemäß Anspruch 7 wird die Zuströmung zur Scheibe so wenig wie möglich behindert, selbst wenn sich der nach unten gebogene Rand der oberen Wand nahe beim Boden des Aufnahmebehälters befindet.

Gemäß Anspruch 8 ist die Dessikativ-Charge sicher im Aufnahmebehälter lagesicherbar.

Gemäß Anspruch 9 läßt sich die Filterglocke kostengünstig und mit hoher Formtreue herstellen. Die Streben erhöhen die Formstabilität und lassen große Flächen frei, so daß insgesamt eine große Filterfläche zur Verfügung steht. Daraus resultiert der Vorteil, das Filtermaterial mit auch zum Zurückhalten feinster Verunreinigungen ausreichend kleiner Porengröße ausbilden zu können, und trotzdem die erforderliche Kältemittel-Strömungsrate zu gewährleisten. Die Zwischenräume zwischen den Streben werden von dem Filtermaterial ausgefüllt.

Alternativ bildet gemäß Anspruch 10 das Filtermaterial die Filterglocke, die durch die aufgespritzen oder aufgeklebten Streben ausgesteift wird.

Besonders zweckmäßig wird gemäß Anspruch 11 die trichter- oder pyramidenförmige obere Wand durch einen zylindrischen oder quaderförmigen Topfkörper nach unten verlängert. Auf diese Weise ergibt sich eine außerordentlich große, von verschiedenen Richtungen anströmbare Filterfläche für das Kältemittel.

Gemäß Anspruch 12 ist die Filterglocke fest im Aufnahmebehälter positionierbar, auch unter betriebsbedingten Erschütterungen bzw. in beliebiger Lage des Aufnahmebehälters. Die formschlüssige Zusammenarbeit zwischen der Filterglocke und dem anderen Behälterende erhöht die Betriebssicherheit und entlastet das Rohr von seitlichen Kräften.

Gemäß Anspruch 13 ist die Lösbarkeit der Verbindung gewährleistet, was z.B. zum Montieren bzw. beim Austauschen der Charge günstig ist.

Alternativ ist gemäß Anspruch 14 das Rohr fest mit der Filterglocke und/oder dem Behälterendteil verbunden. Es ist sichergestellt, daß das Kältemittel keinen Leckagepfad findet.

Die Filterglocke läßt sich mit dem Rohr besonders bequem zur Positionierung der Dessikativ-Charge im Aufnahmebehälter verwenden, wenn die Charge gemäß Anspruch 15 in einem Säckchen aus kältmitteldurchlässigem Material enthalten ist. Bei der Montage wird wenigstens ein solches Säckchen auf das Rohr aufgefädelt, ehe das Rohr im Kopfdeckel oder in der Filterglocke festgelegt wird. Das Säckchen ist dann unverliebar gehalten und hat bereits die in der späteren Betriebslage erforderliche Position. Es können mehrere Säckchen aufgefädelt sein, falls eine größere Trocknungsleistung gebraucht wird. Der Behälterendteil ist mit dem Rohr und mit oder ohne Filterglocke eine Montageeinheit, die sich mittels der lösbaren Verschlußeinrichtung zwischen dem Behälterendteil und dem Behälter festlegen läßt. Gegebenenfalls wird die Filterglocke (und die Charge) mit Hilfe des Zentriersitzes zusätzlich positioniert.

Gemäß Anspruch 17 läßt sich ein Typ einer Filterglocke für unterschiedlich große Aufnahmebehälter verwenden, da die gesamte Filterfläche der Filterglocke sehr groß ist. Die Filterglocke läßt sich auch bei Einsatzfällen verwenden, bei denen ihr Außendurchmesser nur etwa die Hälfte des Innendurchmessers des Aufnahmebehälters beträgt. Andererseits kann die Filterglocke auch relativ knapp in einen kleinen Aufnahmebehälter passen.

Gemäß Anspruch 18 wird mit einer Porengröße zwischen 50 und 150 µm, zweckmäßigerweise bei etwa 50 µm, sichergestellt, daß auch feinste Verunreinigungen aufgefangen und aus dem Kältemittel ausgesondert werden.

Anhand der Zeichnung werden Ausführungsformen des Erfindungsgegenstandes erläutert. Es zeigen:
- Fig. 1: einen Längsschnitt durch eine erste Ausführungsform eines montierten Aufnahmebehälters,
- Fig. 2 + 3: einander zugeordnete Längsschnitt zweier Behälterteile einer weiteren Ausführungsform eines Aufnahmebehälters, vor der Montage,
- Fig. 4 + 5: eine Montageeinheit in zerlegtem Zustand, bestehend aus einem Rohr und einer Filterglocke, die zur Montage an dem Behälterteil gemäß Fig. 3 bestimmt sind, und
- Fig. 6: eine Draufsicht auf die Filterglocke von Fig. 5.

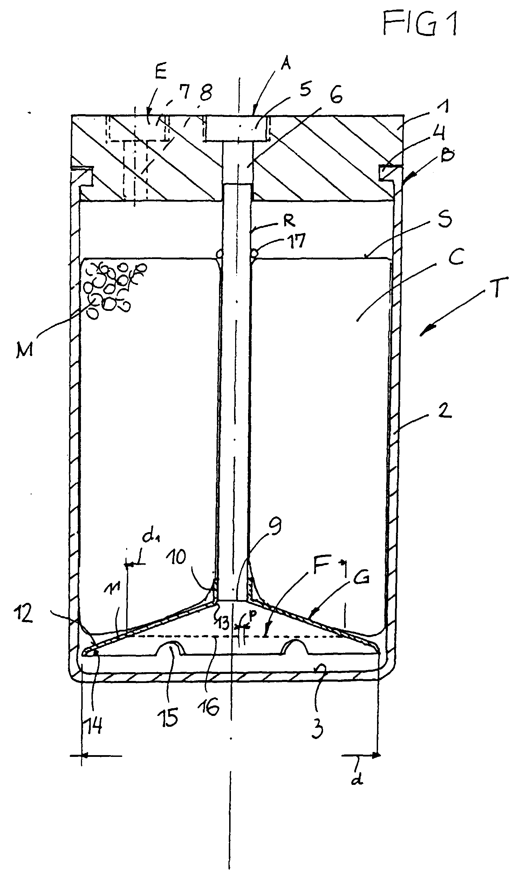

Ein Aufnahmebehälter T ist in Fig. 1 ein aus Kunststoff und/oder Metall (Leichtmetall, langfaserverstärkter Thermoplast wie beispielsweise PA oder PP 6.6 mit ca. 10 mm langen Glasfasern mit einem Gewichtsanteil zwischen 30 und 70 %, vorzugsweise bei etwa 60 %) bestehender topfartiger Behälter B aus einem Kopfdeckel 1 und einem Behälterunterteil 2, die durch eine Bajonett- oder Schraubverbindung 4 trennbar miteinander verbunden sind. Der Aufnahmebehälter T könnte auch schlanker und länger als gezeigt oder kürzer und bauchiger als gezeigt ausgebildet sein. Annähernd in der Behälterachse ist ein Rohr R vorgesehen (ein Saugrohr), das sich vom Kopfdeckel 1 bis in die Nähe des anderen Behälterendes 3 (des Behälterbodens) erstreckt und dort ein freies Ende 9 besitzt. Auf das Saugrohr R ist nahe dem Behälterboden 3 eine Filterglocke G stoffschlüssig aufgebracht, die bei der gezeigten Ausführungsform eine unterseitige Scheibe 16 aus einem Filtermaterial F mit einer Porengröße von ca. 50 bis 150 µm, vorzugsweise bei etwa 50 µm, aufweist. Ferner ist in dem Aufnahmebehälter T wenigstens eine in einem ringschlauchartigen Säckchen S geborgene Charge C eines Dessikativs, z.B. eines Zeolith-Granulats M, enthalten, die durch die Innenwand des Behälterunterteils 2, das Saugrohr R und die Filterglocke G lagegesichert ist.

Im Kopfdeckel sind Ein- und Auslässe E, A für das Kältemittel vorgesehen. Der Auslaß A wird gebildet durch einen Auslaßanschluß 5 und einen Auslaßkanal 6, der den Kopfdeckel 1 durchsetzt. Der Einlaß ist gebildet von einem Einlaßanschluß 7 und einem den Kopfdeckel 1 durchsetzenden Einlaßkanal 8. Das Saugrohr R ist im Auslaßkanal 6 festgelegt, z.B. durch Pressen, Kleben, Verschweißen oder dgl. oder (nicht dargestellt) durch eine Schraub- oder Bajonettverbindung.

Die Filterglocke G ist mit einer oberen Wand 12 versehen, die sich nach Art eines Trichters oder einer Pyramide nach unten erweitert und eine kleindurchmeßrige oben-liegende Öffnung 13 mit einem oberen Rohransatz 10 besitzt. Mittels des Rohransatzes 10 ist die Filterglocke G am Saugrohr R befestigt, z.B. durch Kleben, Ultraschall-Schweißen, Schrauben oder dgl. Der Rohransatz 10 kann außen auf das Saugrohr R auf- oder innen in dieses eingesteckt sein.

Die, vorzugsweise ebene, Scheibe 16 aus dem Filtermaterial F liegt in etwa quer zur Längsachse des Aufnahmebehälters T und an der Unterseite der oberen Wand 12, die sich mit ihrem Außenrand nahe bis zur Innenwand des Behälterunterteils 2 erstreckt und in einem Bereich 14 nach unten umgebogen ist. Die Scheibe 16 ist entweder mit der oberen Wand 12 zusammen (Kunststoff) gespritzt, oder in die Wand 12 eingeklebt, oder auf andere Weise an der oberen Wand 12 befestigt. Der Durchmesser der Scheibe 16 (d1) ist nur geringfügig kleiner als der Durchmesser d der oberen Wand 12 der Filterglocke G. Der Randbereich der oberen Wand 12 kann wenigstens einen kerbenartigen Abschnitt 15 aufweisen. Zur Positionierung der auf dem Saugrohr R gehaltenen Charge C, die auch die Innenwand des Behälterunterteils berühren kann, dient gegebenenfalls ein Anschlag 17 oder ein aufgeschobener O-Ring auf dem Saugrohr R. Ferner kann die Charge C auf der mit 11 bezeichneten Außenseite der oberen Wand 12 der Filterglocke G auf.

Das Filtermaterial F ist zweckmäßigerweise ein Nylon-Monofilament-Gewebe mit einer Porengröße zwischen 40 und 150 µm. Das Saugrohr R kann aus Kunststoff oder aus Leichtmetall bestehen. Alternativ könnte auch die obere Wand 12 aus einem Filtergewebe bestehen oder zumindest zwischen Streben fensterartige Ausschnitte (nicht gezeigt) aufweisen, die durch das Filtermaterial F ausgefüllt werden.

Die Filterglocke G kann zusammen mit dem Rohr R und der darauf festgelegten Charge C eine Austauscheinheit bilden, die beim Ersetzen der Charge eingebracht und mit dem Rohr R im Auslaßkanal 6 festgelegt wird. Es ist denkbar, diese Montageeinheit durch den Kopfdeckel 1 zu ergänzen, oder auch nur die Charge C auszutauschen und dazu das Rohr R entweder aus dem Kopfdeckel 1 und/oder von der Filterglocke G zu lösen.

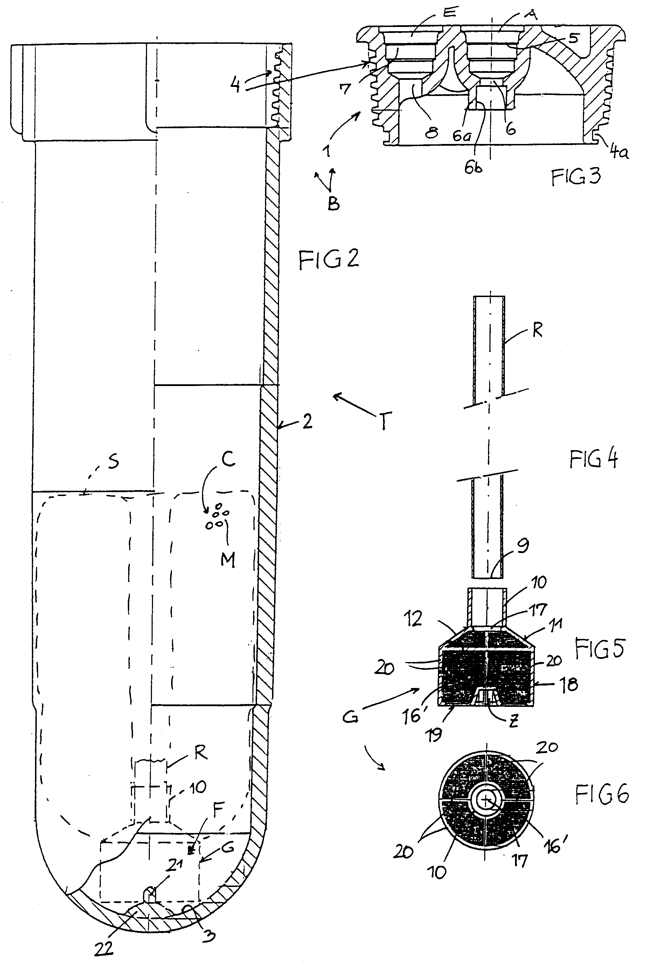

In den Fig. 2 bis 6 wird eine andere Ausführungsform gezeigt. Der Behälterunterteil 2 und der Kopfdeckel 1 des Behälters B, der den Aufnahmebehälter T gemäß den Fig. 2 bis 6 ergibt, bestehen aus langfaserverstärktem, thermoplastischem Kunststoff (z.B. PP oder PA 6.6 mit Glasfasern in Längen von ungefähr 10 mm und mehr und einem Gewichtsanteil zwischen 30 und 70 %, vorzugsweise bei 60 %, erhältlich unter dem Handelsnamen Celstran der Fa. Hoechst Werke AG). Dieser Kunststoffwerkstoff läßt sich im Spritzgußverfahren hervorragend zu Formteilen verarbeiten und erfüllt für Aufnahmebehälter für Fahrzeugklimaanlagen geltende Anforderungen hinsichtlich des Drucks (Druckfestigkeit bis z.B. 105 Bar) und Temperatur (Dauertemperaturen über 100°C), ist kostengünstig und spart Gewicht. Der Aufnahmebehälter T aus diesem neuen Kunststoffmaterial kann dabei ein Trocknerbehälter an der Hochdruckseite einer Klimaanlage oder ein Akkumulator an der Niederdruckseite einer Klimaanlage sein, und jeweils wenigstens eine Charge C und die Filterglocke G enthalten. In einem Akkumulator könnte zusätzlich auch ein Ölabscheide-Bauteil vorgesehen sein (nicht gezeigt).

Der Behälterunterteil hat einen bombierten Endabschnitt beim Behälterboden 3 und einen zentrischen, angeformten Hügel 22 mit einem hochstehenden Zentrieransatz 21 zum zusätzlichen Positionieren der Filterglocke G bzw. der mittels der Filterglocke G lagegesicherten Charge C. Die lösbare Verbindung 4 zwischen dem Kopfdeckel 1 und dem Behälterunterteil 2 ist zweckmäßigerweise als konisches Trapezgewinde ausgebildet, wobei eine zusätzliche Dichtungsnut 4a für ein Dichtungselement im Kopfdeckel 1 geformt sein kann. Die Ein- und Auslässe E, A sind im Kopfdeckel 1 geformt und über die Einlaß- und Auslaßkanäle 8, 6 mit den jeweiligen Anschlüssen 5, 7 verbunden. Beim Auslaßkanal 6 ist ein Rohransatz 6a mit einem Sitz 6b für das Saugrohr R vorgesehen, das durch Kleben oder auf andere Weise im Kopfdeckel 1 festlegbar ist.

Fig. 2 zeigt gestrichelt die betriebsbereite Position der Filterglocke G, die in ihren Wandbereichen das Filtermaterial F aufweist, und beispielsweise einen Außendurchmesser besitzt, der annähernd dem halben Innendurchmesser des Behälterunterteils 2 entspricht. Die Charge C im Säckchen S ist auf das Rohr R aufgefädelt und kann auf der Außenseite 11 der oberen Wand 12 der Filterglocke G aufstehen. Der Innenraum des Aufnahmebehälters T könnte von der Charge gefüllt sein. Wird der Aufnahmbehälter T als Akkumulator verwendet, wird ein größeres freies Volumen zum Speichern flüssigen Kältemittels und Öls vorgesehen.

Die Filterglocke G weist die trichter- oder pyramidenförmige obere Wand 12 mit dem Rohransatz 10 und einer Öffnung 17 auf, die die Strömungsverbindung vom freien Ende 9 des in den Rohransatz 10 eingesteckten oder auf diesen aufgesteckten Rohres R zum Innenraum der Filterglocke G herstellt. Das freie Ende 9 könnte ein Stück in den Innenraum der Filterglocke G ragen. Die obere Wand 12 ist nach unten durch einen zylindrischen oder quaderförmigen oder kugeligen Topfkörper 18 mit einem Boden 19 verlängert, so daß ein Hohlraum in der Filterglocke G vorliegt, der mit dem Rohr R nur über die Öffnung 17 in Strömungsverbindung steht. Die Filterglocke G kann in Käfigbauweise aus Kunststoff oder Metall mit einzelnen Streben 20 hergestellt sein, wobei die Zwischenräume zwischen den Streben mit dem flächigen Filtermaterial F ausgefüllt sind. Alternativ wäre es denkbar, die Filterglocke G zur Gänze aus dem flächigen Filtermaterial zu formen und die Streben 20 nur zur Verbesserung der Eigensteifigkeit außen und/oder innen vorzusehen. Zweckmäßigerweise liegt aber zwischen dem Filtermaterial F und den Streben eine Haftverbindung vor. Im Boden 19 ist, z.B. zentral, eine Zentriervertiefung Z eingeformt, die zu dem Zentrierfortsatz 21 am Behälterboden 3 paßt.

In Fig. 6 ist in einer Draufsicht auf die Filterglocke G erkennbar, daß die Öffnung 17 zum Inneren der Filterglocke G führt und im Rohransatz 10 liegt. Das Filtermaterial F kann in einzelnen Scheiben 16' oder gleich - wie erwähnt - in der Form der Filterglocke G verwendet werden. Die Höhe des Topfkörpers 18 ist beispielsweise größer als die Höhe der oberen Wand 12, so daß sich insgesamt eine sehr große Durchgangsfläche für das Kältemittel ergibt.

Durch Abstimmen der Länge des Rohres R auf den Abstand zwischen dem Sitz 6b und dem Zentrierfortsatz 21 ist es möglich, spezielle Verbindungen zwischen dem Rohr R und den Sitz 6b bzw. dem Rohr R und dem Rohransatz 10 zu vermeiden. Es genügt ein Paßsitz, weil die Filterglocke G bei ordnungsgmäß angezogenem Kopfdeckel 1 ohnedies auf dem Zentrierfortsatz 21 aufsitzt und positioniert wird. Sicherheitshalber könnte jedoch zumindest der Rohransatz 10 mit dem Rohr R durch Ultraschallschweißen verbunden sein.

Bei Austausch der Charge C wird diese mittels der Filterglocke G herausgezogen. Gegebenenfalls wird zunächst die Verbindung zwischen dem Kopfdeckel 1 und dem Rohr R oben gelöst, ehe die Filterglocke G mit der Charge C herausgezogen wird. Nach Abnahme der Charge C vom Rohr R kann eine neue Charge aufgebracht und können die Komponenten 1, 2, R und G wieder auf die vorerwähnte Weise miteinander zum Zusammenwirken gebracht werden. Denkbar wäre es auch, den Kopfdeckel 1 mit dem fest daran angebrachten Filterglocke G sowie wenigstens einer zuvor aufgebrachten Charge C als Austauscheinheit komplett zu ersetzen und den Behälterunterteil 2 weiterzuverwenden.

## Patentansprüche

1. Aufnahmebehälter (T) für eine Dessikativ-Charge (C) in einer Fahrzeug-Klimaanlage, mit wenigstens einer Einlaß- und Auslaßöffnung (A, E) in einem Behälterteil (1), mit einem in einer der Öffnungen angebrachten, sich längs im Aufnahmebehälter bis in den Bereich des anderen Behälterendes (3) erstreckenden Rohr (R), mit wenigstens einer Charge (C), und aus einem am Rohr (R) angeordneten, das freie Rohrende (9) enthaltenden Hohlkörper, der bis auf eine Durchgangsöffnung (17) geschlossen ist und wenigstens einen für Kältemittel durchlässigen Wandbereich aufweist, **dadurch gekennzeichnet,** daß der Hohlkörper eine Filterglocke (G) mit flächigem Filtermaterial (F) im durchlässigen Wandbereich ist, und daß die Dessikativ-Charge (C) außerhalb der Filterglocke (G) angeordnet ist.

2. Aufnahmebehälter nach Anspruch 1, **dadurch gekennzeichnet,** daß die Filterglocke (G) eine obere, die Öffnung (17) enthaltende Wand (12) mit der Form eines sich nach unten erweiternden Trichters oder einer Pyramide aufweist.

3. Aufnahmebehälter nach Anspruch 1, **dadurch gekennzeichnet,** daß die Öffnung (17) in einem Rohransatz (10) der oberen Wand (12) angeordnet ist.

4. Aufnahmebehälter nach Anspruch 2, **dadurch gekennzeichnet,** daß die Außenabmessungen der oberen Wand (12), vorzugsweise nur geringfügig, kleiner sind als die Innenabmessungen des Aufnahmebehälters (T) nahe des anderen Behälterendes (3).

5. Aufnahmebehälter nach Anspruch 2, **dadurch gekennzeichnet,** daß die obere Wand (12) undurchlässig und selbsttragend ausgebildet ist, und daß an der Unterseite der oberen Wand (12) eine Scheibe (16) aus dem Filtermaterial (F) angeordnet ist.

6. Aufnahmebehälter nach Anspruch 5, **dadurch gekennzeichnet,** daß die Außenabmessungen der Scheibe (16) kleiner sind als die Außenabmessungen der oberen Wand (12), und daß die Filterfläche der Scheibe (16) ein Vielfaches der Querschnittsfläche des Rohres (R) ist.

7. Aufnahmebehälter nach Anspruch 6, **dadurch gekennzeichnet,** daß der über die Scheibe (16) überstehende, vorzugsweise nach unten umgebogene, Außenrand (14) der oberen Wand (12) wenigstens eine Kerbe (15) aufweist.

8. Aufnahmebehälter nach wenigstens einem der vorhergehenden Ansprüche, **dadurch gekennzeichnet,** daß die Charge (C) auf das Rohr (R) aufgefädelt ist, und daß die am Rohr (R) angebrachte Filterglocke (E) zusammen mit dem Rohr (R) einen Positionierungssitz für die Charge (C) bildet.

9. Aufnahmebehälter nach Anspruch 1, **dadurch gekennzeichnet,** daß die Filterglocke (G) ein Kunststoff- oder Metall-Formteil in Käfigbauweise aus mit dem Rohransatz (10) verbundenen Streben (20) ist, und daß die Zwischenräume zwischen den Streben (20) mit dem flächigen Filtermaterial (F) ausgefüllt sind.

10. Aufnahmebehälter nach Anspruch 9, **dadurch gekennzeichnet,** daß das Filtermaterial (F) einen bis auf die Öffnung (17) beim Rohransatz (10) geschlossenen Hohlkörper bildet, der durch aufgespritzte Streben (20) ausgesteift ist.

11. Aufnahmebehälter nach Anspruch 9 oder 10, **dadurch gekennzeichnet,** daß die trichter- oder pyramidenförmige obere Wand (12) durch einen annähernd zylindrischen oder sphärischen Topfkörper (18) nach unten verlängert ist, der allseits durch das flächige Filtermaterial (F) gebildete, durchlässige Wandbereiche aufweist.

12. Aufnahmebehälter nach Anspruch 11, **dadurch gekennzeichnet,** daß im Boden (19) des Topfkörpers (18) ein Zentriersitz (Z) geformt ist, in den ein im anderen Behälterende (3) vorgesehener Zentriervorsprung (21, 22) einsetzbar ist.

13. Aufnahmebehälter nach wenigstens einem der vorhergehenden Ansprüche, **dadurch gekennzeichnet,** daß das Rohr (R) in der Filterglocke (G) und/oder im Behälterendteil (1) lösbar festgelegt ist, z.B. mit einer Schraub-, Preß-, Paß- oder Bajonettverbindung.

14. Aufnahmebehälter nach wenigstens einem der Ansprüche 1 bis 12, **dadurch gekennzeichnet,** daß das Rohr (R) in der Filterglocke (G) und/oder im Behälterendteil (1) nicht lOsbar festgelegt ist, z.B. durch Kleben, Schweißen (Ultraschall), Löten.

15. Aufnahmebehälter nach wenigstens einem der vorhergehenden Ansprüche, **dadurch gekennzeichnet,** daß die Dessikativ-Charge in einem torusartigen Säckchen (S) aus kältmitteldurchlässigem Material enthalten ist.

16. Aufnahmebehälter nach wenigstens einem der vorhergehenden Ansprüche, **dadurch gekennzeichnet,** daß der Behälterendteil (1) mit dem Rohr (R) und der Filterglocke (G) sowie mit wenigstens einer auf das Rohr (R) aufgefädelten Charge (C) eine austauschbare Montageeinheit bildet, die mittels einer lösbaren Verschlußeinrichtung (4) im Aufnahmebehälter (T) anbringbar und, vorzugsweise, mittels des Zentriersitzes (Z) am anderen Behälterendteil (3) positionierbar ist.

17. Aufnahmebehälter nach wenigstens einem der Ansprüche 11 oder 12, **dadurch gekennzeichnet,** daß der Außendurchmesser der Filterglocke erheblich kleiner ist als der Innendurchmesser des anderen Behälterendteils (3), ca. nur halb so groß ist wie dieser.

18. Aufnahmebehälter nach wenigstens einem der vorhergehenden Ansprüche, **dadurch gekennzeichnet,** daß das Filtermaterial ein flächiges Filtergewebe mit gleichförmiger Porengröße (p) ist, vorzugsweise mit einer zwischen 40 und 150 µm liegenden Porengröße, vorzugsweise mit nahe bei 50µm liegender Porengröße.
